# FASCICULE DE BREVET EUROPEEN

(11) **EP 3 127 592 B1**
(45) Date de publication et mention de la délivrance du brevet: **11.05.2022**
(21) Numéro de dépôt: 16182823.1
(22) Date de dépôt: 04.08.2016
(51) Int. Cl.: B01D 35/02, B01D 35/06, B01D 29/13, F16L 55/24

(54) **CRÉPINE POUR HUILE MOTEUR DE TURBOMACHINE**
FILTER FÜR MOTORÖL EINER TURBOMASCHINE
STRAINER FOR TURBINE ENGINE OIL

(30) Priorité: 06.08.2015 BE 201505500
(43) Date de publication de la demande: 08.02.2017
(73) Titulaire: Safran Aero Boosters SA, 4041 Herstal (BE)
(72) Inventeur: Jacquerie, Jean-Louis, 4520 Antheit (BE); Henkes, Tom, 4700 Eupen (BE); Tossens, Laurent, 4020 Liège (BE); Fellin, Nicolas, 4570 Marchin (BE); Chenoux, Mathieu, 6700 Arlon (BE)
(74) Mandataire: Lecomte & Partners

(56) Documents cités:
- WO-A1-2012/120252
- WO-A1-2014/149141
- WO-A1-2014/174323
- JP-A- 2006 102 720
- US-A- 4 036 758

## Description

### Domaine technique

L' invention se rapporte au domaine des crépines. Plus précisément, l' invention concerne une crépine de filtration d' huile d'une turbomachine. L' invention a également trait à une turbomachine axiale, notamment un turboréacteur d' avion ou un turbopropulseur d' aéronef. L' invention propose en outre un procédé de fabrication d'une crépine.

### Technique antérieure

Un turboréacteur d' avion emploie de l' huile pour remplir différentes fonctions. Cette huile peut être employée afin d' actionner des vérins assurant le déplacement d' organes du turboréacteur. Elle permet également de lubrifier des équipements du turboréacteur tels des paliers et un réducteur épicycloïdal. Un circuit d' huile avec des conduites et des pompes assure la distribution et la collecte de l' huile dans le turboréacteur. Le circuit est doté d'un échangeur de chaleur pour refroidir l' huile avant qu'elle n' aille lubrifier les équipements puisque leur fonctionnement génère un échauffement.

Lors du fonctionnement, les équipements et les organes peuvent s'user et libérer des particules dans le circuit d' huile. Ces particules peuvent également provenir de l' environnement extérieur. Leur présence nuit au bon fonctionnement des équipements et des organes. Elles risquent de provoquer une usure précoce, et à l' extrême une panne. C'est pour cette raison que le circuit d' huile est doté d'une crépine pour intercepter les particules et éviter qu' elles ne deviennent un danger.

Le document US2008/0047888 A1 divulgue une crépine pour un circuit d' huile pressurisé de turboréacteur. La crépine comprend un treillis conique et une douille de maintien du treillis. Cette dernière montre des gorges pour son montage dans le circuit d' huile où le treillis intercepte des débris. Cette conception permet une simplification de fabrication, ainsi qu'une facilité de montage dans un siège correspondant. Toutefois, le prix de la crépine reste élevé. US 4 036 758 A, WO 2014/174323 A1, WO 2012/120252 A1, JP 2006 102720 A et WO 2014/149141 A1 sont d'autres documents pertinents.

### Résumé de l'invention

### Problème technique

L' invention a pour objectif de résoudre au moins un des problèmes posés par l' art antérieur. Plus précisément, l' invention a pour objectif d' améliorer la fiabilité d'une crépine.

### Solution technique

L' invention a pour objet une crépine de turbomachine, notamment pour huile, la crépine comprenant : un treillis destiné à filtrer un fluide le traversant, le treillis étant éventuellement courbe ; une structure de maintien du treillis formant un épaississement, remarquable en ce que la structure et le treillis sont venus matière et sont réalisés par fabrication additive par couches.

Selon un mode avantageux de l' invention, la crépine comprend un aimant logé dans la structure, l' aimant et la structure étant réalisés en des matériaux différents.

Le treillis forme une portion angulaire de tube et selon un mode avantageux de l' invention, s' étend sur la majorité de la longueur de la crépine, la structure délimitant préférentiellement chaque extrémité du treillis.

Selon un mode avantageux de l' invention, la structure présente au moins une fenêtre grillagée par le treillis, préférentiellement plusieurs fenêtres grillagées par le treillis qui sont supposées de sorte à prolonger les faces du treillis.

Selon un mode avantageux de l' invention, la structure présente au moins un pilier de maintien du treillis, préférentiellement au moins deux piliers parallèles.

La structure présente au moins un anneau de maintien du treillis, préférentiellement au moins un anneau encercle le treillis.

Le ou au moins un ou chaque anneau forme une paroi de maintien du treillis, la paroi étant apte à compartimenter la crépine.

Selon un mode avantageux de l' invention, la crépine est généralement tubulaire et présente un axe principal, la structure s' étendant suivant l'axe principal sur toute la longueur du treillis, préférentiellement sur toute la longueur de la crépine.

Selon un mode avantageux de l' invention, la structure comprend une base de fixation destinée à être fixée sur un support de la turbomachine, préférentiellement la base forme une extrémité de la crépine et forme une plaque étanche.

Selon un mode avantageux de l' invention, la structure présente un fourreau avec un logement parallèle au treillis, préférentiellement le logement s' étend sur sensiblement toute la longueur du treillis.

Selon un mode avantageux de l' invention, le treillis comprend des mailles de largeur inférieure ou égales à 800 µm, et/ou espacées d'au plus 500 µm, préférentiellement espacées d'au plus 300 µm, plus préférentiellement espacées d' au plus 200 µm.

Selon un mode avantageux de l' invention, le treillis présente au moins une face libre, préférentiellement au moins une portion du treillis comprend deux faces libres opposées selon l' épaisseur de ladite portion.

Selon un mode avantageux de l' invention, la structure comprend au moins une gorge périmétrique, préférentiellement plusieurs gorges périmétriques réparties sur la crépine.

Selon un mode avantageux de l' invention, la structure et le treillis forment un ensemble monobloc, la crépine étant éventuellement monobloc.

Selon un mode avantageux de l' invention, au moins un ou chaque pilier s' étend sur toute la longueur du treillis.

Selon un mode avantageux de l' invention, la structure et le treillis délimitent au moins partiellement une espace interne, l' espace étant préférentiellement cylindrique.

Selon un mode avantageux de l' invention, le logement du fourreau est décalé par rapport au treillis, préférentiellement en dehors du treillis, plus préférentiellement totalement en dehors du treillis.

Selon un mode avantageux de l' invention, le treillis comprend une face interne et une face externe, lesdites faces étant des faces libres.

Selon un mode avantageux de l' invention, l' aimant est enveloppé dans le logement du fourreau.

Selon un mode avantageux de l' invention, la crépine présente plusieurs étages, éventuellement au moins trois étages destinés à protéger au moins trois lignes différentes d'un circuit d' huile.

Selon un mode avantageux de l' invention, le treillis et la structure comprennent au moins un, préférentiellement plusieurs bords communs courbes, et/ou le treillis comprend un bord de jonction commun à la fenêtre qui l' entoure.

L' invention a également pour objet une crépine, notamment pour huile, la crépine comprenant : un treillis courbe destiné à filtrer un fluide, un support de montage formant un bloc de matière et supportant le treillis, qui maintient éventuellement la courbure du treillis, remarquable en ce que le support et le treillis sont venus matière et éventuellement réalisés par fabrication additive par couches. Le support peut correspondre à la structure présenté ci-avant.

L' invention a également pour objet une turbomachine, notamment un turboréacteur multi-flux, la turbomachine comprenant une crépine, remarquable en ce que la crépine est conforme à l' invention, préférentiellement la turbomachine comprend un circuit d' huile filtrée par la crépine, et/ou des paliers lubrifiés par l' huile du circuit d' huile, et/ou des actionneurs hydrauliques apte à être entrainés par la pression de l' huile du circuit d' huile, et/ou un réducteur épicycloïdal.

Selon un mode avantageux de l' invention, le circuit d' huile est un circuit pressurisé comprenant une pompe, éventuellement en aval de la crépine, préférentiellement le circuit comprend un groupe de lubrification avec un bloc de matière dans lequel sont disposées ladite pompe et la crépine.

L' invention a également pour objet un procédé de fabrication d'une crépine, notamment pour huile de turbomachine, la crépine présentant un treillis courbe de filtration d'un fluide et une structure de maintien du treillis formant un épaississement, le procédé comprenant l' enchaînement des étapes suivantes : (a) conception d'un modèle d'une crépine, et (b) fabrication de la crépine selon le modèle conçu lors de l' étape (a) conception, remarquable en ce que l' étape (b) fabrication est une étape de fabrication additive par couches de la crépine en réalisant simultanément le treillis et la structure.

Selon un mode avantageux de l' invention, le procédé comprend en outre une étape (c) usinage chimique de la crépine, notamment du treillis, préférentiellement la majorité de surfaces usinées de la crépine sont obtenues par usinage chimique.

Selon un mode avantageux de l' invention, l' empilement des couches est perpendiculaire à la direction de filtration du treillis.

Selon un mode avantageux de l' invention, le procédé comprend une étape (e) montage de l' aimant en l' insérant de force dans le fourreau, préférentiellement la surface interne du fourreau en contact de l' aimant est brute.

De manière générale, les modes avantageux de chaque objet de l' invention sont également applicables aux autres objets de l' invention. Dans la mesure du possible, chaque objet de l' invention est combinable aux autres objets.

### Avantages apportés

Le mode de réalisation autorise davantage de liberté sur la géométrie, et simplifie la fabrication, l' assemblage. Les pertes de charges de l' écoulement au travers de la crépine sont mieux maîtrisées ; l' énergie nécessaire à l' entraînement de l' écoulement décroît. La jonction directe entre le treillis et la structure permet de supprimer des interstices où se logeraient les impuretés, ce qui simplifie l' entretien et le contrôle.

Le présent type de crépine permet de lier le treillis à la structure en assurant une continuité de matière, et une homogénéité. La fiabilité est renforcée grâce à la suppression d' étapes d' assemblage et à la suppression d' interfaces mécanique, de surfaces de contact. Cela simplifie également l' assemblage.

L' invention offre en outre une résistance mécanique optimisée. Le comportement face aux vibrations propre à un turboréacteur est encore amélioré. Ce bénéfice est garanti malgré la pression de fonctionnement s' exerçant sur la crépine.

### Brève description des dessins

La figure 1 représente une turbomachine avec un circuit d' huile selon l' invention.
La figure 2 illustre une crépine selon un premier mode de réalisation de l' invention.
La figure 3 est une coupe de la crépine selon le premier mode de réalisation de l' invention suivant l' axe 3-3 tracé sur la figure 2.
La figure 4 est une coupe de la crépine selon un deuxième mode de réalisation de l' invention suivant l' axe 3-3 tracé sur la figure 2.
La figure 5 est un diagramme d'un procédé de réalisation d'une crépine selon l' invention.

### Description des modes de réalisation

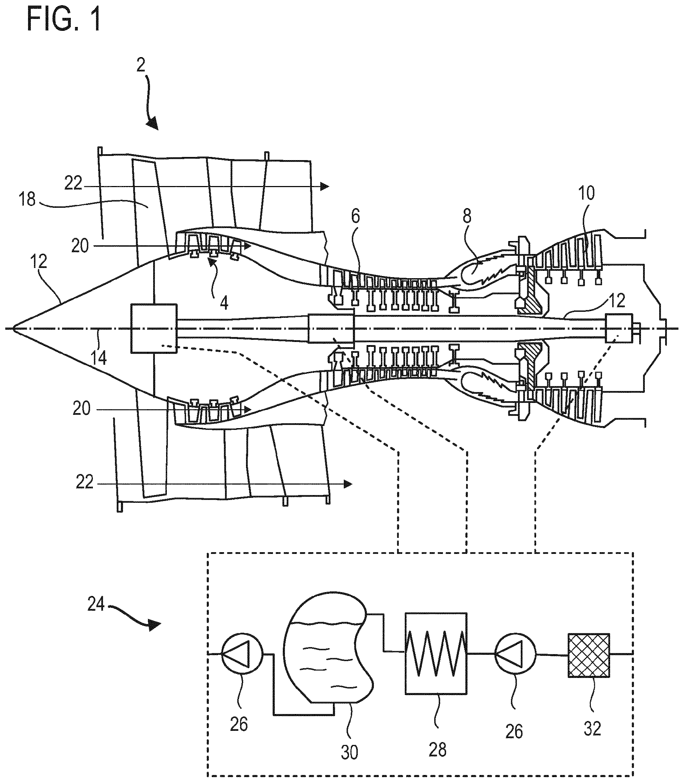

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l' arbre central jusqu' au rotor 12 met en mouvement les deux compresseurs 4 et 6. Ces derniers comportent plusieurs rangées d' aubes de rotor associées à des rangées d' aubes de stators. La rotation du rotor autour de son axe de rotation 14 permet ainsi de générer un débit d'air et de comprimer progressivement ce dernier jusqu' à l' entrée de la chambre de combustion 8. Des moyens de démultiplication peuvent augmenter la vitesse de rotation transmise aux compresseurs.

Un ventilateur d' entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée permettant le vol de l' avion associé.

La turbomachine 2 comprend un circuit d' huile 24 pressurisée. Cette huile lubrifie et refroidit les paliers. Ces paliers permettent d' articuler l' arbre basse pression, l' arbre haute pression, et l' arbre de la soufflante. L' huile peut notamment être employée dans le réducteur de la soufflante. Elle trouve également un emploi dans des actionneurs hydrauliques grâce à sa pression.

Le circuit peut également inclure une ou plusieurs pompes 26, éventuellement gerotor, pour refouler ou entraîner ou aspirer l' huile dans des chambres de lubrification. L' huile circule dans un échangeur de chaleur 28, dans un réservoir 30. Différentes lignes, éventuellement indépendantes, peuvent permettre de lubrifier les organes de manière indépendante. A cet effet, le circuit 24 peut former plusieurs boucles. Il est évident que le circuit peut suivre tout tracé découlant des besoins de la turbomachine 2.

Afin de préserver la propreté de l' huile, le circuit 24 est équipé d'une ou plusieurs crépines 32. Une crépine 32 peut être prévue dans un réservoir 30, et/ou dans une conduite entre deux organes, et/ou au sein même d'un organe de la turbomachine 2. La crépine 32 peut être logée dans un groupe de lubrification recevant également des pompes 26 ; par exemple en aval des pompes 26. La crépine 32 peut être étagée, ainsi une seule pièce permettre de filtrer plusieurs lignes. La manipulation, le contrôle et l' entretien deviennent plus simples.

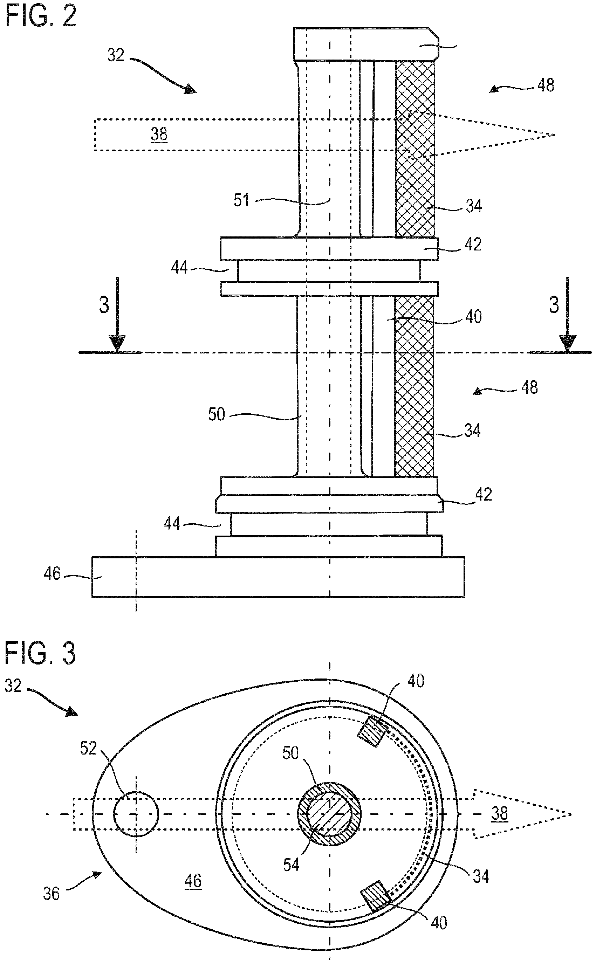

La figure 2 représente une crépine 32 selon un premier mode de réalisation de l' invention, en l' occurrence une crépine 32 à deux étages. Trois ou davantage d' étages sont envisageables. La présente crépine 32 est à écoulement radial, toutefois l' invention se prête également à une crépine à écoulement axial.

La crépine 32 peut être métallique. La crépine 32 comprend un treillis 34 formant une feuille et une structure de maintien 36 du treillis. Le treillis 34 présente généralement une forme de fraction de tube et délimite un espace interne cylindrique traversé radialement par le flux d' huile 38 à filtrer. Il peut être en arc de cercle, il peut présenter une courbure constante.

Le treillis 34 s' étend sur la majorité de la longueur de la crépine 32, la structure 36 délimitant préférentiellement chaque extrémité du treillis 34. La longueur est ici perpendiculaire au sens de l' écoulement 38, et/ou perpendiculaire à la direction radiale. Le treillis 34 forme un grillage, un tamis refusant le passage au débris de taille supérieure à 800 µm grâce à ses mailles. Cependant, il peut être configuré de sorte à bloquer des particules plus fines. Ses mailles passantes peuvent ainsi être inférieures à 0,80 mm. Leurs diagonales peuvent être inférieures ou égales à 1.20 mm. Les mailles peuvent être carrées, et délimitées par des tiges de largueurs inférieures à 0.30 mm.

Le treillis 34 forme partiellement la peau de la crépine 32, par exemple sur la majorité de sa surface. Les faces du treillis 34 sont libres afin d' intercepter directement les débris et de limiter la perte de charge. Cela tend aussi à simplifier la crépine 32,à simplifier sa fabrication tout en préservant sa fiabilité.

La structure 36 forme une ossature qui parcourt, entoure, l' étendue du treillis 34 pour lui permettre conserver sa forme. A cet effet, la structure 36 montre plusieurs piliers axiaux 40 s' étendant suivant l' axe de la crépine 32. Ces piliers 40 sont entrecoupés par des anneaux de maintien 42 du treillis 34. Les anneaux 42 peuvent présenter des gorges périphériques 44 pour y ajouter un joint torique d' étanchéité (non représenté). Optionnellement, ces anneaux 42 forment des parois pour compartimenter la crépine 32, de sorte qu'elle présente des étages étanches.

La structure 36 peut comprendre une base de fixation 46 pour le montage de la crépine 32 sur un support, par exemple le corps du groupe de lubrification. La base 46 peut former une extrémité de la crépine. L' anneau inférieur 42 et/ou la base 46 présente(nt) un épaississement par rapport au voile que forme le treillis 34. Elle peut comprendre un épaississement local, par exemple pour y ménager une gorge propre.

Les piliers 40 peuvent s' étendre depuis la base 40. La structure 36 peut montrer des fenêtres 48 grillagées par le treillis 34. En particulier, les fenêtres 48 superposées peuvent être délimitées par les anneaux 42 et les piliers 40. Le treillis 34 peut ainsi joindre les anneaux 42 les uns aux autres, et les piliers 40 les uns aux autres. Aussi, les piliers 40 et les anneaux 42 peuvent couper le treillis 34, en le scindant en plusieurs parcelles ou portions, éventuellement propre à une fenêtre 48. Le treillis 34 ou chacune de ses portion présente un bord de jonction commun à la fenêtre 48 qui l' entoure, et donc commun aux piliers 40 et aux anneaux 42 qui le délimitent. Un bord présente une zone courbe pour permettre au treillis 42 de conserver sa courbure.

La structure 36 peut former au moins un fourreau 50. Celui-ci délimite un logement voisin au treillis 34. Il s' étend le long de l' axe principal 51 de la crépine, l' axe principal 51 étant selon la hauteur, et/ou l' allongement le plus long. Le logement peut s' étendre sur sensiblement toute la longueur du treillis 34. Le fourreau 50 peut être un pilier. La crépine peut comprendre un aimant enveloppé, préférentiellement enfermé, dans la structure 36. L' aimant peut être un aimant permanent. Il peut être formé de plusieurs tronçons introduits dans le fourreau, puis bloqué à l' aide d'une résine ou d'un clip élastique. L' aimant piège les débris métalliques dont l' analyse permet d' estimer l' usure des éléments dont ils sont issus.

Avantageusement, la structure 36 et le treillis 34 sont venus matière, et sont réalisés par fabrication additive par couches à base de poudre d' aluminium, de titane, d' acier, de leurs alliages, ou de tout autre matériau adéquat. Le treillis 34, les piliers 40, les anneaux 42, les parois, le fourreau 50 peuvent ainsi être venu de matière et réalisé par fabrication additive. L' aimant est en un autre matériau.

La figure 3 montre une coupe de la crépine 32. Cette coupe est effectuée selon l' axe 3-3 représenté sur la figure 2. Il peut s'agir d'une couche de fabrication additive.

La coupe traverse la structure 36 et le treillis 34. Les piliers 40, le fourreau 50 et les aimants 54 sont ici coupés. La base 46 apparaît en contrebas avec son orifice traversant 52 qui permet la fixation de la crépine 32. Le treillis 34 peut former un tube ou une fraction angulaire de tube. Il peut généralement former un demi-tube. Il peut parcourir au moins un cinquième de tour, préférentiellement au moins un quart de tour, plus préférentiellement au moins un tiers de tour. L' aspect courbe augmente la surface spécifique de filtration du treillis 34, tout en permettant une certaine rigidité.

La crépine 32 est généralement tubulaire, une partie de la surface de tube est formée par le treillis 34. La structure 36 reproduit cette forme, facilitant l' étanchéité dans un alésage du groupe de lubrification. Le profil en fraction de cercle du treillis est un optimal pour un logement cylindrique.

Le fourreau 50 peut être en position centrale du tube, pour intercepter des particules ferromagnétiques du flux 38, soit en amont du treillis 34 pour ne pas l' obstruer. Il est configuré pour garantir la rigidité de la structure 36, pour permettre de maintenir les piliers 40 droits, et pour préserver l' écart entre les anneaux 42. Les piliers 40 peuvent occuper des positions latérales, pour maintenir le treillis 34 selon sa courbure, ce que réalisent également les anneaux 42.

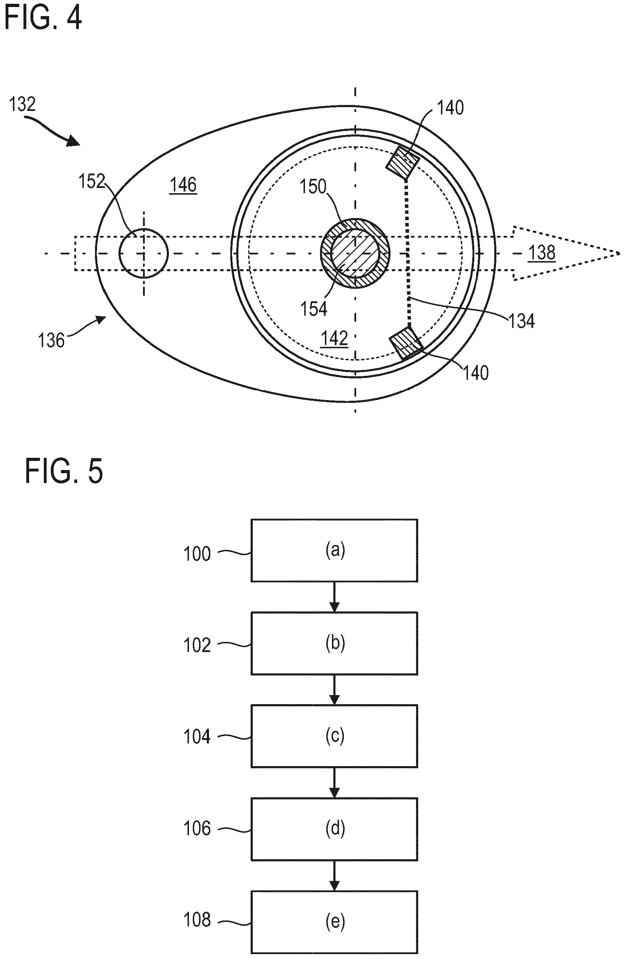

La figure 4 montre une coupe de la crépine 132 selon un deuxième mode de réalisation de l' invention. Cette coupe est effectuée selon l' axe 3-3 représenté sur la figure 2. Il peut s'agir d'une couche de fabrication additive. La numérotation reprend la numérotation des figures précédentes pour les éléments similaires ou identiques, la numérotation étant toutefois incrémentée de 100.

La crépine 132 selon le deuxième mode de réalisation est sensiblement identique à la crépine selon le premier mode de réalisation, elle en diffère néanmoins en ce que son treillis 134 est plan. La coupe traverse la structure 136 et le treillis 134. Les piliers 140, le fourreau 150 et les aimants 154 sont ici coupés. La base 146 apparaît en contrebas avec son orifice traversant 152 qui permet la fixation de la crépine 132.

Le treillis 134 s' étend en ligne droite d'un pilier 140 à l' autre. Il forme un plan perpendiculaire à la base 146. Le treillis 134 peut s' étendre parallèlement aux aimants 154 et au fourreau 150 ; il peut notamment rester à distance du fourreau 150. Le treillis 134 peut former un rideau entre les anneaux 142.

Le fourreau 150 peut être en position centrale du tube, pour intercepter des particules ferromagnétiques, soit en amont du treillis 134 pour ne pas l' obstruer. Il est configuré pour garantir la rigidité de la structure 136, pour permettre de maintenir les piliers 140 droits, et pour préserver l' écart entre les anneaux 142. Les piliers 140 peuvent occuper des positions latérales pour maintenir à plan le treillis 134, ce que réalisent également les anneaux 142.

La figure 5 représente un diagramme du procédé de fabrication d'une crépine. La crépine peut correspondre à celle décrite en relation avec les figures 2 à 4.

Le procédé peut comprendre l' enchaînement des étapes suivantes réalisées dans l' ordre qui suit :
(a) conception 100 d'un modèle d'une crépine ;
(b) fabrication additive 102 de la crépine selon le modèle conçu lors de l' étape (a) conception, en réalisant simultanément la structure et le treillis ;
(c) usinage chimique 104 de la crépine ;
(d) usinage mécanique 106, par exemple de la base ;
(e) montage 108 de l' aimant, qui est optionnelle car la présence de l' aimant reste facultative.

L' étape (a) conception 100 permet d' établir un modèle numérique par conception assistée par ordinateur. Le modèle théorique permet de filtrer des particules d'une taille prédéterminée ; par exemple de 800 µm. La crépine théorique permet également de respecter une perte de charge théorique inférieure ou égale à un seuil prédéfini.

L' étape (b) fabrication 102 est une étape de fabrication additive par couches superposées, également appelé impression 3D. Un tel procédé est bien connu de l' homme du métier et peut être reconnu sur la crépine en effectuant une coupe d'un échantillon de sa matière. Le procédé peut mettre en œuvre de la poudre, notamment métallique, et en la fusionnant localement. Un matériau d' apport en fil est envisageable. Les couches peuvent être inférieures à 1,00 mm, préférentiellement inférieures à 0,50 mm, plus préférentiellement inférieures à 0,050 mm d' épaisseur. La finesse des couches permet de créer un entrecroisement d'axes de treillis plus fins, ce qui permet de réaliser davantage de mailles sur une surface donnée. Par ce biais, la perte de charge est réduite. Au cours de ce procédé, plusieurs couche de matière sont solidifiées l' une après l' autre. Plusieurs couchent forment à la fois la structure et le treillis. Eventuellement, plusieurs couchent forment à la fois le fourreau, les piliers et le treillis.

L' étape (c) usinage chimique 104 peut permettre d' améliorer l' état de surface de la crépine brute, c' est-à-dire issue de la fabrication additive. Elle peut traiter la majorité des surfaces usinées de la crépine qui sont usinées, y compris le treillis. Cette étape (c) augmente la taille des mailles brutes en affinant les tiges du treillis brut de fabrication additive. L' affinage permet de dépasser la finesse réalisable par fabrication additive, notamment à base de poudre, éventuellement par faisceau d' électrons ou par laser.

L' étape (d) usinage mécanique 106 peut être réalisée par tournage, par fraisage. Toutefois, cette étape reste optionnelle selon l' invention, tout comme l' usinage chimique. En effet, une ou ces deux étapes peut être supprimée, car l' un des usinages ou la fabrication additive peut permettre de réaliser des surfaces fonctionnelles satisfaisantes suivant les besoins. L' ordre de réalisation des étapes d' usinage (c) et (d) peut être inversé.

Les caractéristiques présentées en relation au procédé peuvent être appliqués au produit, et inversement.

## Revendications

1. Crépine (32) de turbomachine (2), notamment pour huile, la crépine (32) comprenant :
un treillis (34) destiné à filtrer un fluide (38) le traversant ;
une structure (36) de maintien du treillis (34) formant un épaississement,
la structure (36) et le treillis (34) sont venus matière et sont réalisés par fabrication additive par couches,
**caractérisée en ce que**
la structure (36) présente au moins un anneau de maintien (42) du treillis (34), et le ou au moins un ou chaque anneau (42) forme une paroi de maintien du treillis (34),
et **en ce que** le treillis (34) forme une portion angulaire de tube.

2. Crépine (32) selon la revendication 1, **caractérisée en ce qu'**elle comprend un aimant (54) logé dans la structure (36), l'aimant (54) et la structure (36) étant réalisés en des matériaux différents.

3. Crépine (32) selon l'une des revendications 1 à 2, **caractérisée en ce que** le treillis (34) s'étend sur la majorité de la longueur de la crépine (32), la structure (36) délimitant préférentiellement chaque extrémité du treillis (34).

4. Crépine (32) selon l'une des revendications 1 à 3, **caractérisée en ce que** la structure (36) présente au moins une fenêtre grillagée (48) par le treillis (34), préférentiellement plusieurs fenêtres grillagées (48) par le treillis (34) qui sont supposées de sorte à prolonger les faces du treillis (34).

5. Crépine (32) selon l'une des revendications 1 à 4, **caractérisée en ce que** la structure (36) présente au moins un pilier de maintien (40) du treillis (34), préférentiellement au moins deux piliers (40) parallèles.

6. Crépine (32) selon l'une des revendications 1 à 5, **caractérisée en ce qu'**au moins un anneau (42) encercle le treillis (34) et la paroi est apte à compartimenter la crépine (32).

7. Crépine (32) selon l'une des revendications 1 à 6, **caractérisée en ce que** la structure (36) comprend une base de fixation (46) destinée à être fixée sur un support de la turbomachine (2), préférentiellement la base (46) forme une extrémité de la crépine (32) et forme une plaque étanche.

8. Crépine (32) selon l'une des revendications 1 à 7, **caractérisée en ce que** la structure (36) présente un fourreau (50) avec un logement parallèle au treillis (34), préférentiellement le logement s'étend sur sensiblement toute la longueur du treillis (34).

9. Crépine (32) selon l'une des revendications 1 à 8, **caractérisée en ce que** le treillis (34) présente au moins une face libre, préférentiellement au moins une portion du treillis (34) comprend deux faces libres opposées selon l'épaisseur de ladite portion.

10. Crépine (32) selon l'une des revendications 1 à 9, **caractérisée en ce que** la structure (36) comprend au moins une gorge périmétrique (44), préférentiellement plusieurs gorges périmétriques réparties sur la crépine (32).

11. Turbomachine (2), notamment un turboréacteur multi-flux, la turbomachine (2) comprenant une crépine (32), **caractérisée en ce que** la crépine (32) est conforme à l'une des revendications 1 à 10, préférentiellement la turbomachine (2) comprend un circuit d'huile (24) filtrée par la crépine (32), et/ou des paliers lubrifiés par l'huile du circuit d'huile, et/ou des actionneurs hydrauliques apte à être entrainés par la pression de l'huile du circuit d'huile, et/ou un réducteur épicycloïdal.

12. Turbomachine (2) selon la revendication 11, **caractérisée en ce que** le circuit d'huile (24) est un circuit pressurisé comprenant une pompe (26), préférentiellement le circuit comprend un groupe de lubrification avec un bloc de matière dans lequel sont disposées ladite pompe (26) et la crépine (32).

13. Procédé de fabrication d'une crépine (32), notamment pour huile de turbomachine, la crépine (32) présentant un treillis (34) de filtration d'un fluide et une structure de maintien (36) du treillis (34) formant un épaississement, le treillis (34; 134) étant éventuellement courbe; le procédé comprenant l'enchaînement des étapes suivantes :
(a)- conception (100) d'un modèle d'une crépine (32), et
(b)- fabrication (102) de la crépine (32) selon le modèle conçu lors de l'étape (a) conception (100),
l'étape (b) fabrication est une étape de fabrication additive par couches de la crépine (32) en réalisant simultanément le treillis (34) et la structure (36),
**caractérisé en ce que**
le procédé comprend en outre une étape (c) usinage chimique de la crépine (32),
la crépine étant conforme à l'une des revendications 1 à 10.

14. Procédé selon la revendication 13, **caractérisé en ce qu'**il comprend en outre une étape (c) usinage chimique du treillis (34), préférentiellement la majorité de surfaces usinées de la crépine (32) sont obtenues par usinage chimique.

15. Procédé selon l'une des revendications 13 à 14, **caractérisé en ce que** l'empilement des couches est perpendiculaire à la direction de filtration du treillis (34).

## Patentansprüche

1. Filter (32) einer Strömungsmaschine (2), insbesondere für Öl, wobei der Filter (32) umfasst:
ein Gitter (34), das dazu bestimmt ist, ein Fluid (38) zu filtern, das es durchströmt;
eine Struktur (36), die eine Verdickung bildet, zum Halten des Gitters (34), wobei die Struktur (36) und das Gitter (34) zusammengefügt und durch schichtweise additive Fertigung hergestellt werden,
**dadurch gekennzeichnet, dass**
die Struktur (36) mindestens einen Haltering (42) des Gitters (34) aufweist und der oder mindestens einer oder jeder Ring (42) eine Stützwand des Gitters (34) bildet,
und dass das Gitter (34) einen Winkelabschnitt des Rohrs bildet.

2. Filter (32) nach Anspruch 1, **dadurch gekennzeichnet, dass** er einen Magneten (54) umfasst, der in der Struktur (36) untergebracht ist, wobei der Magnet (54) und die Struktur (36) aus unterschiedlichen Materialien bestehen.

3. Filter (32) nach Anspruch 1 bis 2, **dadurch gekennzeichnet, dass** sich das Gitter (34) über den größten Teil der Länge des Filters (32) erstreckt, wobei die Struktur (36) vorzugsweise jedes Ende des Gitters (34) begrenzt.

4. Filter (32) nach Anspruch 1 bis 3, **dadurch gekennzeichnet, dass** die Struktur (36) mindestens ein Gitterfenster (48) durch das Gitter (34) aufweist, vorzugsweise mehrere Gitterfenster (48) durch das Gitter (34), die so angenommen werden, dass sie die Flächen des Gitters (34) verlängern.

5. Filter (32) nach Anspruch 1 bis 4, **dadurch gekennzeichnet, dass** die Struktur (36) mindestens eine tragende Säule (40) des Gitters (34) aufweist, vorzugsweise mindestens zwei parallele Säulen (40).

6. Filter (32) nach Anspruch 1 bis 5, **dadurch gekennzeichnet, dass** mindestens ein Ring (42) das Gitter (34) umgibt und die Wand den Filter (32) aufnehmen kann.

7. Filter (32) nach Anspruch 1 bis 6, **dadurch gekennzeichnet, dass** die Struktur (36) eine Befestigungsbasis (46) umfasst, die dazu bestimmt ist, an einem Träger der Strömungsmaschine (2) befestigt zu werden, wobei vorzugsweise die Basis (46) ein Ende des Filters (32) und eine versiegelte Platte bildet.

8. Filter (32) nach Anspruch 1 bis 7, **dadurch gekennzeichnet, dass dadurch gekennzeichnet, dass** die Struktur (36) eine Ummantelung (50) mit einem Sitz parallel zum Gitter (34) aufweist, wobei sich vorzugsweise der Sitz im Wesentlichen über die gesamte Länge des Gitters (34) erstreckt.

9. Filter (32) nach Anspruch 1 bis 8, **dadurch gekennzeichnet, dass** das Gitter (34) mindestens eine freie Fläche hat, vorzugsweise umfasst mindestens ein Abschnitt des Gitters (34) zwei freie Flächen, die sich entsprechend der Dicke des Abschnitts gegenüberliegen.

10. Filter (32) nach Anspruch 1 bis 9, **dadurch gekennzeichnet, dass dadurch gekennzeichnet, dass** die Struktur (36) mindestens eine perimetrische Nut (44) umfasst, vorzugsweise mehrere perimetrische Nuten, die über den Filter (32) verteilt sind.

11. Strömungsmaschine (2), insbesondere ein Mehrstrom-Turbostrahltriebwerk, wobei die Strömungsmaschine (2) einen Filter (32) umfasst, **dadurch gekennzeichnet, dass** der Filter (32) einem der Ansprüche 1 bis 10 entspricht, wobei die Strömungsmaschine (2) vorzugsweise einen vom Filter (32) gefilterten Ölkreislauf (24) umfasst,
und/oder Lager, die durch das Öl des Ölkreislaufs geschmiert werden, und/oder hy-draulische Stellglieder, die durch den Druck des Öls des Ölkreislaufs angetrieben werden können, und/oder ein epizykloides Untersetzungsgetriebe.

12. Strömungsmaschine (2) nach Anspruch 11, **dadurch gekennzeichnet, dass** der Ölkreislauf (24) ein Druckkreislauf mit einer Pumpe (26) ist, wobei der Kreislauf vorzugsweise eine Schmiereinheit mit einem Materialblock umfasst, in dem die Pumpe (26) und der Filter (32) angeordnet sind.

13. Herstellungsverfahren eines Filters (32), insbesondere für Öl einer Strömungsmaschine, wobei der Filter (32) ein Gitter (34) zum Filtern eines Fluids und eine Haltestruktur (36) für das Gitter (34) aufweist, die eine Verdickung bildet, wobei das Gitter (34; 134) gegebenenfalls gekrümmt ist, wobei das Verfahren die Abfolge der folgenden Schritte umfasst:
(a) Entwerfen (100) eines Modells eines Filters (32) und
(b) Herstellung (102) des Filters (32) nach dem Entwurf (100), der in Schritt (a) zugrunde gelegt wurde,
wobei der Herstellungsschritt (b) ein Schritt der additiven, schichtweisen Herstellung des Filters (32) ist, wobei gleichzeitig das Gitter (34) und die Struktur (36) hergestellt werden, **dadurch gekennzeichnet, dass** das Verfahren darüber hinaus noch einen Schritt (c) der chemischen Bearbeitung des Filters (32) umfasst, wobei der Filter (32) einem der Ansprüche 1 bis 10 entspricht.

14. Verfahren nach Anspruch 13, **dadurch gekennzeichnet, dass** der Schritt (c) darüber hinaus eine chemische Behandlung des Gitters (34) umfasst, wobei vorzugsweise die Mehrheit der bearbeiteten Oberflächen des Filters (32) durch chemische Behandlung erhalten werden.

15. Verfahren nach einem der Ansprüche 13 bis 14, **dadurch gekennzeichnet, dass** der Schichtenstapel senkrecht zur Filterrichtung des Gitters (34) verläuft.

## Claims

1. Turbine engine (2) strainer (32), particularly for oil, the strainer (32) comprising:
a filtering portion (34) intended to filter a fluid (38) crossing it;
a structure (36) for holding the filtering portion (34) forming a thickening, the structure (36) and the filtering portion (34) are integral and are produced by additive manufacturing,
**characterized in that**
the structure (36) exhibits at least one holding ring (42) for the filtering portion (34),
the or at least one or each ring (42) forms a holding wall for the filtering portion (34),
and **in that** the filtering portion (34) forms an angular tube portion.

2. Strainer (32) according to claim 1, **characterized in that** it comprises a magnet (54) housed in the structure (36), the magnet (54) and the structure (36) being made of different materials.

3. Strainer (32) according to one of claims 1 to 2, **characterized in that** the filtering portion (34) extends over most of the length of the strainer (32), the structure (36) preferably delimiting each end of the filtering portion (34).

4. Strainer (32) according to any one of claims 1 to 3, **characterized in that** the structure (36) exhibits at least one window grated (48) by the filtering portion (34), preferably a plurality of windows grated (48) by the filtering portion (34) that are superposed to extend the faces of the filtering portion (34).

5. Strainer (32) according to any one of claims 1 to 4, **characterized in that** the structure (36) exhibits at least one holding post (40) for the filtering portion (34), preferably at least two parallel posts (40).

6. Strainer (32) according to any one of claims 1 to 5, **characterized in that** at least one ring (42) encircles the filtering portion (34) and the wall is capable of partitioning the strainer (32).

7. Strainer (32) according to any one of claims 1 to 6, **characterized in that** the structure (36) comprises a fixing base (46) intended to be fixed to a support of the turbine engine (2), the base (46) preferably forming one end of the strainer (32) and forming an impervious plate.

8. Strainer (32) according to any one of claims 1 to 7, **characterized in that** the structure (36) exhibits a socket (50) with a housing parallel to the filtering portion (34), the housing preferably extending over substantially the entire length of the filtering portion (34).

9. Strainer (32) according to any one of claims 1 to 8, **characterized in that** the filtering portion (34) exhibits at least one free face, preferably at least one portion of the filtering portion (34) comprises two opposite free faces according to the thickness of said portion.

10. Strainer (32) according to any one of claims 1 to 9, **characterized in that** the structure (36) comprises at least one perimeter groove (44), preferably a plurality of perimeter grooves spread over the strainer (32).

11. Turbine engine (2), in particular a multi-flow turbine engine, the turbine engine (2) comprising a strainer (32), **characterized in that** the strainer (32) is according to any one of claims 1 to 10, the turbine engine (2) preferably comprises an oil circuit (24) filtered by the strainer (32) and/or bearings lubricated by oil from the oil circuit, and/or hydraulic actuators capable of being driven by the oil pressure in the oil circuit and/or a epicyclic gearbox.

12. Turbine engine (2) according to claim 11, **characterized in that** the oil circuit (24) is a pressurized circuit comprising a pump (26), the circuit preferably comprises a lubrication assembly with an integral unit in which said pump (26) and the strainer (32) are disposed.

13. Method of producing a strainer (32), particularly for turbine engine oil, said strainer (32) exhibiting a filtering portion (34) for fluid filtration and a structure for holding (36) the filtering portion (34) forming a thickening, said filtering portion (34; 134) possibly being curved; the method comprising the sequence of following steps consisting of:
(a)- design (100) of a strainer (32) model, and
(b)- manufacture (102) of the strainer (32) according to the model devised during the design (100) stage (a),
the manufacturing step (b) being an additive layers manufacturing step of the strainer (32) producing simultaneously the filtering portion (34) and the structure (36),
**characterized in that**
the method moreover comprises a chemical milling stage (c) of the strainer (32),
the strainer (32) being according to any one of the claims 1 to 10.

14. Method according to claim 13, **characterized in that** it moreover comprises a chemical milling stage (c) of the filtering portion (34), preferably most of the milled surfaces of the filtering portion (32) being obtained by chemical milling.

15. Method according to one of claims 13 and 14, **characterized in that** the stacking of the layers is perpendicular to the filtration direction of the filtering portion (34).
